# EUROPÄISCHE PATENTSCHRIFT

(11) **EP 3 145 272 B1**
(45) Veröffentlichungstag und Bekanntmachung des Hinweises auf die Patenterteilung: **08.05.2019**
(21) Anmeldenummer: 16185182.9
(22) Anmeldetag: 22.08.2016
(51) Int. Cl.: H04W 84/20, H04W 4/70, H04M 1/725, H04R 25/00, H04W 4/80, H04W 76/10

(54) **AUSWAHL EINES KOMMUNIKATIONSZUSTANDS FÜR EIN MOBILES ENDGERÄT**
SELECTING A COMMUNICATION STATE OF A MOBILE TERMINAL
SÉLECTION D'UN ÉTAT DE COMMUNICATION POUR UN TERMINAL MOBILE

(30) Priorität: 18.09.2015 DE 102015217982
(43) Veröffentlichungstag der Anmeldung: 22.03.2017
(73) Patentinhaber: Sivantos Pte. Ltd., Singapore 539775 (SG)
(72) Erfinder: GIESNER, Arthur, 90562 Heroldsberg (DE); BÄUML, Robert, 90542 Eckental (DE); SAUER, Gunter, 91052 Erlangen (DE)
(74) Vertreter: FDST Patentanwälte

(56) Entgegenhaltungen:
- WO-A1-2015/018456
- US-A1- 2010 291 955
- US-A1- 2011 033 071

## Beschreibung

Die Erfindung betrifft ein Verfahren zur Auswahl eines Kommunikationszustands wenigstens für ein erstes mobiles Endgerät, wobei das erste mobile Endgerät als Resultat des Verfahrens dauerhaft einen "Slave"-Zustand einnimmt oder dauerhaft einen "Master"-Zustand einnimmt.

In einem drahtlosen Netzwerk zur Kommunikation zwischen mehreren mobilen Endgeräten kann je nach dem zu verwendenden Kommunikationsprotokoll die Erfordernis auftreten, einem mobilen Endgerät einen "Master"-Status zuzuweisen, und die anderen beteiligten mobilen Endgeräte hinsichtlich der Kommunikation im "Slave"-Status zu betreiben.

Dies ist insbesondere dann häufig der Fall, wenn die einzelnen mobilen Endgeräte gemeinsam einen Kanal für die Kommunikation nutzen, in welchem die gleichzeitige Übertragung von Nachrichten, die von mehreren unterschiedlichen mobilen Endgeräten des Netzwerks versandt werden, aus technischen Gründen nicht vorgesehen oder nicht möglich ist. Beispielsweise kann die Bandbreite für die Übertragung in einem Kanal knapp bemessen sein, um nicht mit anderer, nicht aus dem betreffenden Netzwerk stammenden Kommunikation zu interferieren. Dies kann jedoch zur Folge haben, dass das gleichzeitige Versenden von Nachrichten durch mehrere mobile Endgeräte des Netzwerks seinerseits ebenso zu Interferenzen führt.

Dies wird meist dadurch umgangen, dass eines der mobilen Endgeräte als "Master" über die Verwendung des Kanals zur Kommunikation durch die anderen mobilen Endgeräte verfügen kann, welche entsprechend als "Slave" jeweils auf eine Kommunikationsanfrage durch den Master warten, und ihre Daten entsprechend nur auf eine solche Anfrage hin übertragen. Dabei findet diese Übertragung meist zum Master hin statt, welcher die Daten ggf. an den vorgesehenen Slave weitergeben kann.

Eine derartige Architektur des Netzwerks setzt für die erfolgreiche Kommunikation das Vorhandensein einer Master-Slave-Beziehung zwischen den einzelnen mobilen Endgeräten des Netzwerks voraus. Eine derartige Beziehung kann je nach Art des Netzwerks statisch vorgegeben sein, wenn zu erwarten ist, dass eines der mobilen Endgeräte deutlich mehr Daten an die anderen mobilen Endgeräte im Netzwerk überträgt als die anderen, wie z.B. bei der drahtlosen Verbindung eines Lautsprechers mit einem Laptop zum Streamen von Musik, in welchem letzterer meist als Master und der Lautsprecher als Slave betrieben wird.

Gerade bei gleichartigen und hinsichtlich der Kommunikation gleichwertigen Geräten ist jedoch eine statische Vergabe oftmals wenig sinnvoll. Beispielsweise kann dies durch die beiden Hörgeräte eines binauralen Hörgerätesystems oder die einzelnen Headsets einer mobilen Kommunikationssystems gegeben sein, wie es teilweise für den Aufbau und die Durchführung von Großveranstaltungen Einsatz findet. In einem solchen System existiert einerseits keine natürliche Hierarchie bzgl. der Kommunikation im Netzwerk; zudem kann nicht von Anfang an bestimmt werden, ob und wann überhaupt ein weiteres mobiles Endgerät im Netzwerk anwesend ist.

Die US 2011/0033071 A1 nennt Verfahren zur Datenübertragung u.a. zwischen zwei Hörgeräten eines Hörgerätesystems. Hierbei wird vorgeschlagen, zwischen den Hörgeräten ad hoc ein Netzwerk aufzubauen oder einem bestehenden lokalen Netzwerk - in welchem z.B. Unterhaltungseletronik und Mobiltelefone kommunizieren - beizutreten. Hierbei versenden beide Hörgeräte zunächst neutrale Link-Anfragen. Dasjenige Hörgerät, welches eine bestimmte Link-Anfrage als erstes erhält, nimmt dann dauerhaft in den Slave-Zustand ein. Durch den Empfang einer vom Slave-Hörgerät versandten Antwort auf die Link-Anfrage wird das andere Hörgerät in den Master-Zustand versetzt, wodurch auch Kanäle für ein Frequency-Hopping der nachfolgenden Kommunikation festgelegt werden.

In der US 2010/0291955 A1 ist allgemein für Teilnehmer in einem Kommunikationsnetzwerk ein ähnliches Verfahren zum Aufbau von Slave-Master-Beziehungen offenbart. Wird ein teilnehmendes Gerät aktiviert, verbleibt es erst im Slave-Zustand und wartet auf eine Link-Anfrage, um danach, wenn keine Link-Anfrage empfangen wird, in den Master-Zustand zu wechseln und seinerseits Link-Anfragen zu versenden.

Der Erfindung liegt daher die Aufgabe zugrunde, ein Verfahren anzugeben, durch welches auf möglichst einfache und verlässliche Weise für wenigstens ein mobiles Endgerät ein hierarchischer Kommunikationsstatus dynamisch ausgewählt und zugewiesen werden kann.

Die genannte Aufgabe wird erfindungsgemäß gelöst durch ein Verfahren zur Auswahl eines Kommunikationszustands wenigstens für ein erstes mobiles Endgerät gemäß Anspruch 1. Als mobiles Endgerät wird dabei ein erstes Hörgerät eines Hörgerätesystems eingesetzt. Dabei ist vorgesehen, dass das erste mobile Endgerät während einer ersten Zeitspanne einen Slave-Zustand einnimmt, und dabei abwartet, ob durch eine Kommunikationsanfrage von einem anderen mobilen Endgerät an das erste mobile Endgerät eine Verbindung mit dem anderen mobilen Endgerät aufgebaut wird, und bei einem so erfolgten Aufbau einer Verbindung dauerhaft den Slave-Zustand einnimmt, und das andere mobile Endgerät dauerhaft einen Master-Zustand einnimmt. Weiter ist vorgesehen, dass nach der ersten Zeitspanne ohne Kommunikationsanfrage durch ein anderes mobiles Endgerät das erste mobile Endgerät für eine zweite Zeitspanne vom Slave-Zustand in den Master-Zustand wechselt, und dabei eine Anzahl an Kommunikationsanfragen zum Aufbau einer Verbindung mit einem anderen mobilen Endgerät versendet, und bei einem so erfolgten Aufbau einer Verbindung dauerhaft den Master-Zustand einnimmt, und das andere mobile Endgerät dauerhaft den Slave-Zustand einnimmt. Vorteilhafte und teils für sich gesehen erfinderische Ausgestaltungen sind in den Unteransprüchen und in der nachfolgenden Beschreibung dargelegt.

Als anderes mobiles Endgerät ist hierbei insbesondere jedes mobile Gerät zu verstehen, welches für die drahtlose Kommunikation mit wenigstens einem anderen Gerät in einem Netzwerk ausgelegt und eingerichtet ist, also insbesondere zweites Hörgerät des Hörgerätesystems.

Erfindungsgemäß nimmt das erste mobile Endgerät dauerhaft den Slave-Zustand oder einen inaktiven Kommunikationszustand ein, wenn nach einer dritten Zeitspanne keine Verbindung mit einem anderen mobilen Endgerät aufgebaut worden ist, wodurch das Hörgerätesystem in einem monauralen Betrieb verwendet wird.

Unter einem dauerhaften Einnehmen des Master-Zustands bzw. des Slave-Zustands ist hierbei insbesondere umfasst, dass der betreffende Kommunikationszustand für eine Zeitdauer eingenommen wird, welche erheblich größer ist als die erste Zeitspanne und die zweite Zeitspanne. Im "Slave"-Zustand bleibt dabei das mobile Endgerät weiterhin dauerhaft zum Empfang von Kommunikationsanfragen, welche von einem anderen mobilen Endgerät versendet wurden, bereit, während hingegen im inaktiven Kommunikationszustand eine Empfangsbereitschaft des mobilen Endgerätes deaktiviert ist, und insbesondere keine Leistung für die Empfangsbereitschaft bereitgestellt wird.

Insbesondere ist hierbei die dritte Zeitspanne von erheblich längerer Dauer als die erste Zeitspanne und die zweite Zeitspanne. Falls das erste mobile Endgerät - ggf. selbst nach einer weiter unten beschriebenen Iteration - keine Kommunikationsanfrage erhalten hat, und auch die durch das erste mobile Endgerät versandten Kommunikationsanfragen - ggf. selbst nach weiter unten beschriebener Iteration - nicht zu einem Aufbau einer Verbindung mit einem anderen mobilen Endgerät geführt haben, kann nach einer gewissen Dauer auf eine dauerhafte Abwesenheit eines weiteren mobilen Endgeräts, welche in Betrieb ist, geschlossen werden. In diesem Fall wird das erste mobile Endgerät selbständig betrieben, weitere Kommunikationsanfragen unterbleiben fortan. Dies wirkt sich auch vorteilhaft auf den Energieverbrauch aus. Dementsprechend verbleibt das erste mobile Endgerät nach der dritten Zeitspanne, falls noch keine Verbindung aufgebaut wurde, dauerhaft im Slave-Zustand oder im inaktiven Kommunikationszustand.

Insbesondere bedeutet dies, dass das erste Hörgerät als ein erstes mobiles Endgerät zunächst im Slave-Zustand eine Kommunikationsabfrage von einem zweiten Hörgerät abwartet, und bei Ausbleiben einer solchen nach einer ersten Zeitspanne in den Master-Zustand wechselt, um selbst für eine zweite Zeitspanne lang Kommunikationsanfragen zum Aufbau einer Verbindung mit einem zweiten Hörgerät zu versenden. Das erste Hörgerät iteriert bevorzugt den Slave-Zustand und den Master-Zustand in beschriebener Weise für eine dritte Zeitspanne, nach welcher das erste Hörgerät auf eine Abwesenheit des zweiten Hörgeräts schließt, und entsprechend monaural betrieben wird. Hierfür verbleibt es dauerhaft im Slave-Zustand oder im inaktiven Kommunikationszustand, was sich insbesondere vorteilhaft auf den Energieverbrauch auswirkt.

Der Master-Zustand ist hierbei insbesondere dadurch charakterisiert, dass dasjenige mobile Endgerät, welches den Master-Zustand einnimmt, nach dem Aufbau einer Verbindung mit wenigstens einem weiteren mobilen Endgerät durch Versenden von Kommunikationsanfragen jeweils das Übertragen von Daten durch das weitere mobile Endgerät anfordert, an welches die Kommunikationsanfrage versandt wurde. Der Slave-Zustand ist demgegenüber insbesondere dadurch charakterisiert, dass ein mobiles Endgerät, welches den Slave-Zustand einnimmt, nach dem Aufbau einer Verbindung Daten nur auf eine Kommunikationsanfrage eines weiteren mobilen Endgeräts hin überträgt, welches den Master-Zustand einnimmt. Als eine Kommunikationsanfrage ist hierbei einerseits jeweils eine solche Kommunikationsanfrage umfasst, welche eigens und nur zum Zweck eines Verbindungsaufbaus versandt wird, sowie eine direkte, auf das Übertragen von Daten gerichtete Anfrage.

Ausgangspunkt des Verfahrens ist hierbei die Überlegung, wenigstens dem ersten mobilen Endgerät für die Kommunikation mit mindestens einem anderen mobilen Endgerät den entsprechenden Kommunikationszustand - also Master oder Slave - zuzuweisen. Das erste mobile Endgerät, welchem der Kommunikationszustand durch das Verfahren zuzuweisen ist, soll dabei u.a. auch für einen Betrieb ausgelegt sein, welcher durch längere Betriebspausen unterbrochen werden kann, so dass die Zuweisung eines Kommunikationszustands ein derartiges Betriebsverhalten zu berücksichtigen hat. Ebenso ist die Mobilität des ersten mobilen Endgeräts und weiterer mobiler Endgeräte hinsichtlich der Integration in ein Netzwerk zu berücksichtigen.

Angesichts der Tatsache, dass bei einer Inbetriebnahme des ersten mobilen Endgeräts zunächst noch keine Informationen über das aktuelle Vorhandensein oder gar die Architektur eines entsprechenden Netzwerks aus anderen mobilen Endgeräten vorliegt, ist eine Zuweisung des Kommunikationszustands entsprechend dynamisch vorzunehmen. Bevorzugt erfolgt dies bei einer erstmaligen Inbetriebnahme des ersten mobilen Endgeräts oder einer erneuten Inbetriebnahme der Kommunikation nach einer der angesprochenen Betriebspausen. Insbesondere wird also bei einer Inbetriebnahme oder bei einer Änderung der räumlichen Umgebung des ersten mobilen Endgeräts das Verfahren lokal durchgeführt, um für das erste mobile Endgerät zur Kommunikation in einem Netzwerk einen Kommunikationszustand auszuwählen.

Es wird nun erkannt, dass bei einer gewünschten Aufnahme der Kommunikation durch das erste mobile Endgerät eine bestehende Hierarchie in einem möglicherweise bereits existierenden Netzwerk am besten dadurch respektiert wird, dass das erste mobile Endgerät zunächst vorübergehend den Slave-Zustand einnimmt, und auf eine Kommunikationsanfrage durch ein anderes mobiles Endgerät wartet. Würde das erste mobile Endgerät zunächst selbst zumindest vorübergehend den Master-Zustand einnehmen und Kommunikationsanfragen versenden, hätte dies ggf. bei einem noch nicht existierenden Netzwerk den Vorteil, eine Hierarchie schneller aufbauen zu können, doch würde dies um den Preis geschehen, dass es im Falle eines bereits bestehenden Netzwerks mit einem anderen mobilen Endgerät, welches in einem wenigstens temporären Master-Zustand selbst Kommunikationsanfragen versendet, zu Interferenzen im Kanal und hierdurch zu Störungen und Instabilitäten kommen könnte.

Wird nun eine Kommunikationsanfrage von einem anderen mobilen Endgerät empfangen, so erkennt das erste mobile Endgerät das Bestehen eines Netzwerks, welches zumindest das andere mobilen Endgerät umfasst, von dem die Kommunikationsanfrage ausging, und somit das Bestehen einer entsprechenden Hierarchie. Durch die Kommunikationsanfrage des anderen mobilen Endgeräts an das erste mobile Endgerät kann eine Verbindung aufgebaut werden, wobei das erste mobile Endgerät entsprechend für den weiteren Fortgang der Kommunikation den Slave-Zustand einnimmt, wobei das andere mobile Endgerät, welches die Kommunikationsanfrage versandt hat, weiterhin im Master-Zustand verbleibt, und fortan entsprechend durch das Versenden von Kommunikationsanfragen die Übertragung durch das erste mobile Endgerät steuert.

Unterbleibt jedoch eine derartige Kommunikationsanfrage für eine erste Zeitspanne, welche bevorzugt unter Berücksichtigung der zeitlichen Länge der Kommunikationsanfrage günstig zu wählen ist, so schließt das erste mobile Endgerät darauf, dass in seiner Umgebung kein anderes mobiles Endgerät im Master-Modus operiert, und somit auch noch kein Netzwerk besteht. Dies kann einerseits der Fall sein, da sich gar kein weiteres mobiles Endgerät in der Umgebung befindet, oder andere mobile Endgeräte in der Umgebung, so sie überhaupt in Betrieb sind, sich selbst im Slave-Zustand befinden, und entsprechend keine Kommunikationsanfragen versenden.

Dies gibt nun dem ersten mobilen Endgerät die Berechtigung, zumindest für eine entsprechend günstig zu wählende zweite Zeitspanne selbst in den Master-Zustand zu wechseln, und in diesem selbst eine Anzahl, bevorzugt eine Mehrzahl, an Kommunikationsanfragen zu versenden. Wird nun in der Sendereichweite des ersten mobilen Endgeräts ein anderes mobiles Endgerät in Betrieb genommen, so ist vorgesehen, dass das andere mobile Endgerät nach Inbetriebnahme selbst zunächst den Slave-Zustand einnimmt und in diesem auf eine Kommunikationsanfrage wartet. Wechselt nun in dieser Zeit, in welcher das andere mobile Endgerät selbst im Slave-Zustand auf eine Kommunikationsanfrage wartet, das erste mobile Endgerät in den Master-Modus, und versendet die entsprechende Kommunikationsanfrage, so wird nun durch diese mit dem anderen mobilen Endgerät eine Verbindung aufgebaut. Entsprechend bleibt für den weiteren Verlauf der Kommunikation auch die Master-Slave-Beziehung zwischen dem ersten und dem anderen mobilen Endgerät erhalten. Insbesondere wird somit durch das Verfahren nicht nur für das erste mobile Endgerät, sondern auch für das andere mobile Endgerät ein Kommunikationszustand zum dauerhaften Einnehmen ausgewählt, wenn erfolgreich eine Verbindung zwischen dem ersten mobilen Endgerät und dem anderen mobilen Endgerät aufgebaut werden kann.

Wird nun noch ein weiteres mobiles Endgerät in Sendereichweite des wenigstens einen mobilen Endgeräts in Betrieb genommen, so nimmt auch dieses weitere mobile Endgerät zunächst den Slave-Zustand ein, und wird durch eine Kommunikationsanfrage zum Verbindungsaufbau durch das erste mobile Endgerät, welches den Master-Zustand eingenommen hat, in das Netzwerk integriert.

Als vorteilhaft erweist es sich, wenn das erste mobile Endgerät das Einnehmen des Slave-Zustands jeweils für eine erste Zeitspanne und das Einnehmen des Master-Zustands jeweils für eine zweite Zeitspanne iteriert, bis eine Verbindung mit einem anderen mobilen Endgerät aufgebaut ist. Insbesondere bedeutet dies, dass das erste mobile Endgerät nach der zweiten Zeitspanne im Master-Zustand zurück in den Slave-Zustand wechselt, wenn durch die Kommunikationsanfragen, welche das erste mobile Endgerät im Master-Zustand versandt hat, keine Verbindung mit einem anderen mobilen Endgerät zustande gekommen ist. Im Slave-Zustand wartet das erste mobile Endgerät dann seinerseits erneut eine erste Zeitspanne lang auf eine Kommunikationsanfrage, welche von einem anderen mobilen Endgerät zum Aufbau einer Verbindung versandt wurde. Bleibt diese aus, wechselt das erste mobile Endgerät erneut in den Master-Zustand, um erneut selbst Kommunikationsanfragen zum Aufbau einer Verbindung zu versenden. Dies wird nun so lange wiederholt, bis das erste mobile Endgerät erfolgreich eine Verbindung mit einem anderen mobilen Endgerät aufgebaut hat. Das erste mobile Endgerät und das andere mobile Endgerät, mit welchem die Verbindung zustande kommt, werden daraufhin jeweils in jenem Kommunikationszustand - also Master- oder Slave-Zustand - weiter betrieben, welcher jeweils beim erfolgreichen Aufbau der Verbindung vorliegt.

Zweckmäßigerweise wird die Dauer für die erste Zeitspanne und/oder die zweite Zeitspanne jeweils zufällig oder pseudo-zufällig vorgegeben. Unter einer zufälligen bzw. einer pseudo-zufälligen Vorgabe der ersten Zeitspanne und/oder der zweiten Zeitspanne ist insbesondere eine Vorgabe zu verstehen, welche für die Dauer einer entsprechenden Zeitspanne im Weitesten Sinne eine Tabelle oder einen Generator für Zufallszahlen oder für Pseudo-Zufallszahlen heranzieht. Insbesondere werden für den Fall, dass das erste mobile Endgerät das Einnehmen des Slave-Zustands jeweils für eine erste Zeitspanne und das Einnehmen des Master-Zustands jeweils für eine zweite Zeitspanne iteriert, bis eine Verbindung mit einem anderen mobilen Endgerät aufgebaut ist, die erste Zeitspanne und die zweite Zeitspanne in jedem Iterationsschritt jeweils zufällig oder pseudo-zufällig vorgegeben.

Werden beispielsweise das erste mobile Endgerät und das andere mobile Endgerät, mit welchem das erste mobile Endgerät eine Verbindung aufbauen soll, in gegenseitiger Sendereichweite nahezu zeitgleich in Betrieb genommen, so könnte eine statische Vorgabe der ersten Zeitspanne und der zweiten Zeitspanne möglicherweise dazu führen, dass die beiden beteiligten mobilen Endgeräte nahezu synchron vom Slave-Zustand in den Master-Zustand wechseln. Dies würde bedeuten, dass möglicherweise eine Verbindung trotz der Sendereichweite nicht erfolgreich aufgebaut werden kann, da hierfür bevorzugt eine mindestens vorübergehende Master-Slave-Beziehung der beiden mobilen Endgeräte vorzuliegen hat. Indem die Dauern für die erste Zeitspanne und/oder die zweite Zeitspanne jeweils zufällig oder pseudo-zufällig, und bevorzugt in jedem mobilen Endgerät unabhängig vorgegeben werden, wird vermieden, dass die beiden mobilen Endgeräte synchron zwischen den Kommunikationszuständen wechseln, was den Aufbau einer Verbindung erheblich erleichtert und beschleunigt.

Günstigerweise wird zwischen dem ersten mobilen Endgerät und einem anderen mobilen Endgerät eine Verbindung aufgebaut, wobei bei einem Verlust dieser Verbindung das erste mobile Endgerät den Slave-Zustand einnimmt, und den Slave-Zustand mit dem Master-Zustand iteriert, bis erneut eine Verbindung zu dem anderen mobilen Endgerät aufgebaut wird. Zum Aufbau der Verbindung wartet dabei das erste mobile Endgerät im Slave-Zustand jeweils eine Kommunikationsanfrage von dem anderen mobilen Endgerät ab, und versendet im Master-Zustand selbst eine Anzahl an Kommunikationsanfragen. Insbesondere kann das Iterieren des Slave-Zustands mit dem Master-Zustand durch das erste mobile Endgerät auch andauern, bis eine Verbindung mit einem weiteren mobilen Endgerät, zu welchem vorher noch keine Verbindung bestand, aufgebaut ist. Insbesondere verbleibt nach einer dritten Zeitspanne, in welcher das erste mobile Endgerät den Slave-Zustand mit dem Master-Zustand iteriert hat, ohne dass dabei eine Verbindung zum anderen mobilen Endgerät oder zu einem weiteren mobilen Endgerät aufgebaut werden konnte, im Slave-Zustand. Gerade bei der drahtlosen Kommunikation in einem Netzwerk mit mobilen Endgeräten ist aus technischen Gründen prinzipiell ein Verlust einer Verbindung möglich. Tritt dieser Fall ein, so ermöglicht das genannte Vorgehen, beim Wiederaufbau der Verbindung, oder auch ggf. beim Neuaufbau einer anderen Verbindung, umgehend auch den beiden an der Verbindung beteiligten mobilen Endgeräten dynamisch jeweils einen Kommunikationszustand zuzuweisen.

Vorteilhafterweise versendet das erste mobile Endgerät die Anzahl an Kommunikationsanfragen mittels einer induktiven Übertragung. Eine induktive Übertragung weist üblichermaßen eine vergleichsweise kurze Sendereichweite auf. Je nach Frequenz und Sendeleistung beträgt diese zwischen einigen Zentimeter und wenigen Metern. Gerade bei einem Netzwerk aus mobilen Endgeräten, welche sich während einer vorgesehenen Kommunikation miteinander meist in einem derartigen Abstand zueinander befinden, hat eine induktive Übertragung den Vorteil, aufgrund der kurzen Sendereichweite wenig störungsanfällig durch Interferenzen anderer, nicht am Netzwerk beteiligter Sendequellen zu sein. Zudem wird im Fall, dass der Abstand zwischen den am Netzwerk beteiligten oder zu beteiligenden mobilen Endgeräten im oben genannten Bereich liegt, bei einer induktiven Übertragung vergleichsweise wenig Sendeleistung in nicht benötigte Fernfeld-Bereiche abgestrahlt, was sich günstig auf den Energieverbrauch eines mobilen Endgeräts auswirkt.

In einer weiter vorteilhaften Ausgestaltung der Erfindung wird als anderes mobiles Endgerät ein zweites Hörgerät des Hörgerätesystems eingesetzt, wobei
das erste Hörgerät dauerhaft den Slave-Zustand einnimmt und das zweites Hörgerät dauerhaft den Master-Zustand einnimmt, oder das erste Hörgerät dauerhaft den Master-Zustand einnimmt und das zweites Hörgerät dauerhaft den Slave-Zustand einnimmt und dadurch das Hörgerätesystem in einem binauralen Betrieb verwendet wird. Dies soll bedeuten, dass die beiden Hörgeräte eines binauralen Hörgerätesystems jeweils als das erste mobile Endgerät bzw. das andere mobile Endgerät die Verfahrensschritte zur Auswahl des Kommunikationszustands durchführen. Als Resultat wird somit entweder das erste Hörgerät nach einem Verbindungsaufbau mit dem zweiten Hörgerät dauerhaft im Slave-Zustand betrieben und das zweite Hörgerät dementsprechend dauerhaft im Master-Zustand, oder das erste Hörgerät wird nach einem Verbindungsaufbau mit dem zweiten Hörgerät dauerhaft im Master-Zustand betrieben und das zweite Hörgerät dementsprechend dauerhaft im Slave-Zustand. Somit sind für die Kommunikation im binauralen Betrieb des Hörgeräts die entsprechenden Kommunikationszustände zugewiesen.

In einem binauralen Hörgerätesystem wird meist für die Übertragung der jeweiligen Audio-Daten zum Erzeugen eines lokalen Raumklangs in jedem der beiden Hörgeräte eine Master-Slave-Beziehung zwischen den beiden Hörgeräten aufgebaut. In vielen binauralen Hörgerätesystemen wird diese Master-Slave-Beziehung statisch vergeben, beispielsweise während des Fitting-Prozesses bei einem Hörgeräte-Akustiker. Diese statische Vergabe des Kommunikationszustands an das jeweilige Hörgerät hat jedoch insbesondere beim Ausfall eines der beiden Hörgeräte - z.B. infolge eines Defekts oder einer turnusgemäßen Wartung - den Nachteil, dass das die Funktionalität des verbleibenden Hörgeräts auch für einen monauralen Betrieb erheblich eingeschränkt sein kann.

Die Durchführung des Verfahrens mit den beiden Hörgeräte eines binauralen Hörgerätesystems als jeweilige mobile Endgeräte hat nun den Vorteil, auf einfache Weise beiden Hörgeräten nach einer gemeinsamen Inbetriebnahme jeweils einen Kommunikationszustand einer Master-Slave-Beziehung zuzuweisen. Insbesondere wirkt sich auch die Ausgestaltung vorteilhaft aus, im Fall eines Verlustes der Verbindung wenigstens einem der Hörgeräte den Slave-Zustand mit dem Master-Zustand - und entsprechendes Verhalten hinsichtlich der Kommunikationsanfragen - so lange zu iterieren, bis die Verbindung mit dem anderen Hörgerät wieder aufgebaut ist, und hierdurch auch jedem der beiden Hörgeräte ein Kommunikationszustand zugewiesen ist. Bevorzugt erfolgt die Iteration hierbei mit zufälligen oder pseudo-zufälligen ersten und zweiten Zeitspannen.

Die Erfindung nennt weiter ein Hörgerätesystem mit wenigstens einem Hörgerät gemäß Anspruch 7, wobei das Hörgerätesystem dazu eingerichtet ist, das vorbeschriebene Verfahren durchzuführen. Die für das Verfahren und seine Weiterbildungen genannten Vorteile können hierbei sinngemäß auf das Hörgerätesystem übertragen werden. Nachfolgend wird ein Ausführungsbeispiel der Erfindung anhand einer Zeichnung näher erläutert. Hierbei zeigen jeweils schematisch:

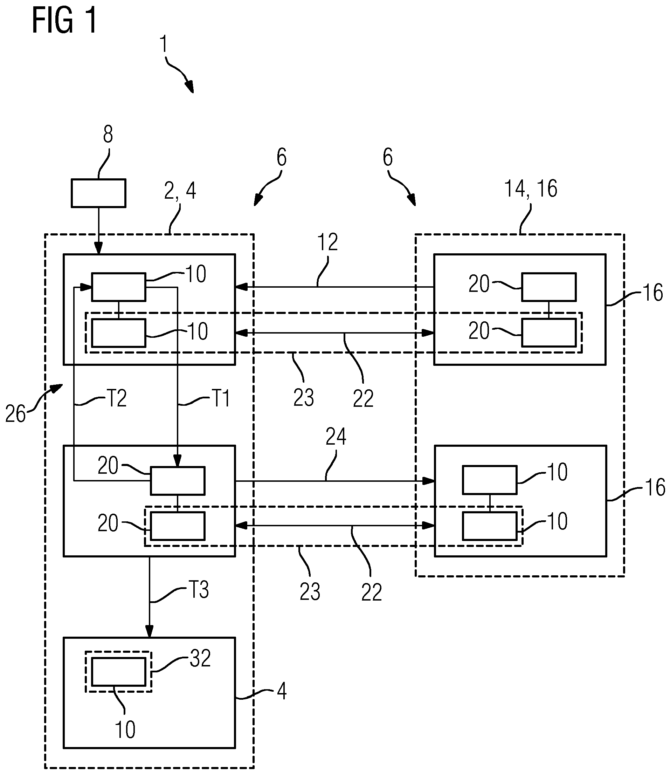

- Fig. 1: in einem Blockdiagramm den Ablauf des Verfahrens zur Auswahl von Kommunikationszuständen für die zwei Hörgeräte eines binauralen Hörgerätesystems nach Inbetriebnahme.

In Fig. 1 ist in einem Blockdiagramm das Ablauf eines Verfahrens 1 dargestellt. Ein erstes mobiles Endgerät 2, welches als ein erstes Hörgerät 4 eines binauralen Hörgerätesystems 6 ausgebildet ist, nimmt nach einer Inbetriebnahme 8 zunächst einen Slave-Zustand 10 ein. Im Slave-Zustand 10 wartet das erste Hörgerät 4 eine Kommunikationsanfrage 12 eines anderen mobilen Endgeräts 14 ab, welches hier als ein zweites Hörgerät 16 des binauralen Hörgerätesystems 6 ausgebildet ist. Sendet das zweite Hörgerät 16 eine Kommunikationsanfrage 12 an das erste Hörgerät 4, befindet sich dabei das zweite Hörgerät 16 vorübergehend in einem Master-Zustand 20. In diesem Fall wird durch die vom zweiten Hörgerät 16 an das erste Hörgerät 4 versandte Kommunikationsanfrage 12 eine Verbindung 22 aufgebaut. Das erste Hörgerät 4 nimmt nach dem Aufbau der Verbindung 22 dauerhaft, also z.B. für die Dauer des Betriebs bis zum nächsten Ausschalten, den Slave-Zustand 10 ein, während das zweite Hörgerät 16 dauerhaft den Master-Zustand 20 einnimmt. Das binaurale Hörgerätesystem 6 wird dabei fortan im binauralen Betrieb 23 verwendet.

Unterbleibt jedoch die Kommunikationsanfrage 12 während einer ersten Zeitspanne T1, sei es, weil das zweite Hörgerät 16 sich bzgl. des ersten Hörgeräts 4 außerhalb seiner Sendereichweite befindet, oder weil das zweite Hörgerät 16 noch nicht in Betrieb genommen ist, so wechselt das erste Hörgerät 4 selbst vom Slave-Zustand 10 in den Master-Zustand 20, und versendet seinerseits Kommunikationsanfragen 24 zum Aufbau der Verbindung 22 mit dem zweiten Hörgerät 16. Nach dem Aufbau einer Verbindung 22, welche durch eine vom ersten Hörgerät 4 an das zweite Hörgerät 16 versandte Kommunikationsanfrage 24 zustande gekommen ist, verbleibt das erste Hörgerät 4 im Master-Zustand 20. Das zweite Hörgerät 16, welches für den erfolgreichen Aufbau der Verbindung 22 durch die Kommunikationsanfrage 24 zunächst im Slave-Zustand 10 betrieben wird, verbleibt nun für den weiteren Betrieb im Slave-Zustand 10. Auch hier wird nun fortan das binaurale Hörgerätesystem 6 im binauralen Betrieb 23 verwendet.

Unterbleibt jedoch der Aufbau einer Verbindung 22 durch eine vom ersten Hörgerät 4 an das zweite Hörgerät 16 versandte Kommunikationsanfrage 24 auch während einer zweiten Zeitspanne T2, so wechselt das erste Hörgerät 4 wieder in den Slave-Zustand 10 zurück. Das erste Hörgerät iteriert nun den Slave-Zustand 10, in welchem es eine Kommunikationsanfrage 12 vom zweiten Hörgerät 16 zum Aufbau der Verbindung 22 abwartet, mit dem Master-Zustand 20, in welchem es selbst Kommunikationsanfragen 24 zum Aufbau der Verbindung 22 an das zweite Hörgerät 16 versendet. Die Dauern der jeweils ersten Zeitspannen T1, in welchen das erste Hörgerät 4 dabei im Slave-Zustand 10 verbleibt, und der jeweils zweiten Zeitspannen T2, in welchen das erste Hörgerät 4 im Master-Zustand 20 verbleibt, können während der Iteration 26 zufällig oder pseudo-zufällig variiert werden, um beim Wechsel zwischen den Kommunikationszuständen 30 ein mit dem zweiten Hörgerät 16 synchrones Verhalten zu verhindern.

Wird auch nach einer dritten Zeitspanne T3, welche deutlich länger ist als die erste Zeitspanne T1 und die zweite Zeitspanne T2, keine Verbindung 22 zwischen dem ersten Hörgerät 4 und dem zweiten Hörgerät 16 aufgebaut, so wird vermutet, dass das zweite Hörgerät 16 abwesend oder außer Betrieb ist. Entsprechend wird das binaurale Hörgerätesystem 6 nun nur mit dem ersten Hörgerät 4 in einem monauralen Betrieb 32 verwendet. Indem hierbei das erste Hörgerät 4 dafür dauerhaft den Slave-Zustand 10 einnimmt, und somit keine Kommunikationsanfragen 24 versendet, kann die Batterie oder der Akkumulator des ersten Hörgeräts geschont werden. Die Batterie oder der Akkumulator kann hierbei noch zusätzlich geschont werden, wenn das erste Hörgerät 4 dauerhaft in einen nicht näher dargestellten inaktiven Kommunikationszustand wechselt, in welchem das erste Hörgerät 4 keine Kommunikationsanfragen 12 mehr erwartet, so dass für die Empfangsbereitschaft des ersten Hörgeräts 4 keine Leistung mehr verbraucht wird.

Geht im binauralen Betrieb 23 des binauralen Hörgerätesystems 6 die Verbindung 22 zwischen dem ersten Hörgerät 4 und dem zweiten Hörgerät 16 zwischenzeitlich verloren, beispielsweise aufgrund einer technischen Störung in einem der beiden Hörgeräte 4, 16 oder aufgrund einer Interferenz mit einem äußeren Signal, so beginnt das erste Hörgerät 4 zunächst erneut im Slave-Zustand 10, auf eine Kommunikationsanfrage 12 des zweiten Hörgeräts 16 zum Wiederherstellen der Verbindung 22 zu warten, und iteriert den Slave-Zustand 10 mit dem Master-Zustand 20 in bereits beschriebener Weise so lange, bis entweder die Verbindung 22 wieder aufgebaut ist, oder die dritte Zeitspanne T3 abgelaufen ist.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Verfahren
- 2: erstes mobiles Endgerät
- 4: erstes Hörgerät
- 6: binaurales Hörgerätesystem
- 8: Inbetriebnahme
- 10: Slave-Zustand
- 12: Kommunikationsanfrage
- 14: anderes mobiles Endgerät
- 16: zweites Hörgerät
- 20: Master-Zustand
- 22: Verbindung
- 23: binauraler Betrieb
- 24: Kommunikationsanfrage
- 36: Iteration
- 30: Kommunikationszustand
- 32: monauraler Betrieb

- T1: erste Zeitspanne
- T2: zweite Zeitspanne
- T3: dritte Zeitspanne

## Patentansprüche

1. Verfahren (1) zur Auswahl eines Kommunikationszustands wenigstens für ein erstes mobiles Endgerät (2), wobei als erstes mobiles Endgerät (2) ein erstes Hörgerät (4) eines Hörgerätesystems (6) eingesetzt wird, wobei das erste mobile Endgerät (2) während einer ersten Zeitspanne (T1)
- abwartet, ob durch eine Kommunikationsanfrage (12) von einem anderen mobilen Endgerät (14) an das erste mobile Endgerät (2) eine Verbindung (22) mit dem anderen mobilen Endgerät (14) aufgebaut wird, und bei einem so erfolgten Aufbau einer Verbindung (22)
- dauerhaft einen "Slave"-Zustand (10) einnimmt, und das andere mobile Endgerät (14) dauerhaft einen "Master"-Zustand (20) einnimmt,
wobei nach der ersten Zeitspanne (T1) ohne Kommunikationsanfrage (12) durch ein anderes mobiles Endgerät (14) das erste mobile Endgerät (2) für eine zweite Zeitspanne (T2)
- eine Anzahl an Kommunikationsanfragen (24) zum Aufbau einer Verbindung (22) mit einem anderen mobilen Endgerät (14) versendet, und bei einem so erfolgten Aufbau einer Verbindung (22)
- dauerhaft den "Master"-Zustand (20) einnimmt, und das andere mobile Endgerät (14) dauerhaft den "Slave"-Zustand (10) einnimmt,
**dadurch gekennzeichnet, dass**
- das erste mobile Endgerät (14) während der ersten Zeitspanne (T1) den "Slave"-Zustand (10) einnimmt, und für die zweite Zeitspanne (T2) vom "Slave"-Zustand (10) in den "Master"-Zustand (20) wechselt, und
- das erste mobile Endgerät (2) dauerhaft den "Slave"-Zustand (10) oder einen inaktiven Kommunikationszustand einnimmt, wenn nach einer dritten Zeitspanne (T3) keine Verbindung (22) mit einem anderen mobilen Endgerät (14) aufgebaut worden ist, und dadurch das Hörgerätesystem (6) in einem monauralen Betrieb (32) verwendet wird.

2. Verfahren (1) nach Anspruch 1,
wobei das erste mobile Endgerät (2) das Einnehmen des "Slave"-Zustands (10) jeweils für eine erste Zeitspanne (T1) und das Einnehmen des "Master"-Zustands (20) jeweils für eine zweite Zeitspanne (T2) iteriert (26), bis eine Verbindung (22) mit einem anderen mobilen Endgerät (14) aufgebaut ist oder das erste mobile Endgerät (2) dauerhaft den "Slave"-Zustand (10) oder den inaktiven Kommunikationszustand einnimmt.

3. Verfahren (1) nach Anspruch 1 oder Anspruch 2,
wobei die Dauer für die erste Zeitspanne (T1) und/oder die zweite Zeitspanne (T2) jeweils zufällig oder pseudo-zufällig vorgegeben wird.

4. Verfahren (1) nach einem der vorhergehenden Ansprüche,
wobei zwischen dem ersten mobilen Endgerät (2) und einem anderen mobilen Endgerät (14) eine Verbindung (22) aufgebaut wird,
wobei bei einem Verlust dieser Verbindung (22) das erste mobile Endgerät (2) den "Slave"-Zustand (10) einnimmt, und den "Slave"-Zustand (10) mit dem "Master"-Zustand (20) iteriert, bis erneut eine Verbindung (22) zu dem anderen mobilen Endgerät (14) aufgebaut wird oder die dritte Zeitspanne (T3) abgelaufen ist.

5. Verfahren (1) nach einem der vorhergehenden Ansprüche,
wobei das erste mobile Endgerät (2) die Anzahl an Kommunikationsanfragen (24) mittels einer induktiven Übertragung versendet.

6. Verfahren (1) nach einem der vorhergehenden Ansprüche,
wobei als anderes mobiles Endgerät (14) ein zweites Hörgerät (16) des Hörgerätesystems (6) eingesetzt wird, und wobei
- das erste Hörgerät (4) dauerhaft den "Slave"-Zustand (10) einnimmt und das zweites Hörgerät (20) dauerhaft den "Master"-Zustand (20) einnimmt, oder
- das erste Hörgerät (4) dauerhaft den "Master"-Zustand (20) einnimmt und
das zweites Hörgerät (16) dauerhaft den "Slave"-Zustand (10) einnimmt und dadurch das Hörgerätesystem (6) in einem binauralen Betrieb (23) verwendet wird.

7. Hörgerätesystem (6) mit wenigstens einem Hörgerät (4), wobei das Hörgerätesystem (6) dazu eingerichtet ist, das Verfahren (1) nach einem der vorhergehenden Ansprüche durchzuführen.

## Claims

1. Method (1) for selecting a communication status at least for a first mobile terminal (2), wherein the first mobile terminal (2) used is a first hearing device (4) of a hearing device system (6), wherein the first mobile terminal (2), during a first time period (T1),
- waits to see whether a communication request (12) from another mobile terminal (14) to the first mobile terminal (2) sets up a connection (22) to the other mobile terminal (14), and, if a connection (22) has been set up in this way,
- constantly assumes a "slave" status (10), and the other mobile terminal (14) constantly assumes a "master" status (20),
wherein after the first time period (T1) without a communication request (12) by another mobile terminal (14), the first mobile terminal (2), for a second time period (T2),
- sends a number of communication requests (24) to set up a connection (22) to another mobile terminal (14), and, if a connection (22) has been set up in this way,
- constantly assumes the "master" status (20), and the other mobile terminal (14) constantly assumes the "slave" status (10),
**characterized in that**
- the first mobile terminal (14) assumes the "slave" status (10) during the first time period (T1), and changes from the "slave" status (10) to the "master" status (20) for the second time period (T2), and
- the first mobile terminal (2) constantly assumes the "slave" status (10) or an inactive communication status if, after a third time period (T3), a connection (22) to another mobile terminal (14) has not been set up, and as a result the hearing device system (6) is used in a monaural mode (32).

2. Method (1) according to Claim 1,
wherein the first mobile terminal (2) iterates (26) the assuming of the "slave" status (10) in each case for a first time period (T1) and the assuming of the "master" status (20) in each case for a second time period (T2) until a connection (22) to another mobile terminal (14) has been set up or the first mobile terminal (2) constantly assumes the "slave" status (10) or the inactive communication status.

3. Method (1) according to Claim 1 or Claim 2, wherein the duration for the first time period (T1) and/or the second time period (T2) is prescribed in each case randomly or pseudo-randomly.

4. Method (1) according to one of the preceding claims,
wherein a connection (22) is set up between the first mobile terminal (2) and another mobile terminal (14), wherein if this connection (22) is lost then the first mobile terminal (2) assumes the "slave" status (10), and iterates the "slave" status (10) with the "master" status (20) until a connection (22) to the other mobile terminal (14) is set up again or the third time period (T3) has elapsed.

5. Method (1) according to one of the preceding claims,
wherein the first mobile terminal (2) sends the number of communication requests (24) by means of an inductive transfer.

6. Method (1) according to one of the preceding claims,
wherein the other mobile terminal (14) used is a second hearing device (16) of the hearing device system (6),
and wherein
- the first hearing device (4) constantly assumes the "slave" status (10) and the second hearing device (20) constantly assumes the "master" status (20), or
- the first hearing device (4) constantly assumes the "master" status (20) and the second hearing device (16) constantly assumes the "slave" status (10),
and as a result the hearing device system (6) is used in a binaural mode (23).

7. Hearing device system (6) having at least one hearing device (4), wherein the hearing device system (6) is configured to perform the method (1) according to one of the preceding claims.

## Revendications

1. Procédé (1) pour sélectionner un état de communication au moins pour un premier terminal mobile (2), dans lequel un premier appareil auditif (4) d'un système d'aide auditive (6) est utilisé en tant que premier terminal mobile (2), dans lequel, pendant une première période de temps (T1), le premier terminal mobile (2)
- attend de savoir si une liaison (22) avec l'autre terminal mobile (14) est établie par une demande de communication (12) envoyée par un autre terminal mobile (14) au premier terminal mobile (2), et lorsque la liaison (22) a ainsi été établie,
- passe en permanence dans un état "esclave" (10) et l'autre terminal mobile (14) passe en permanence dans un état "maître" (20),
dans lequel, après la première période de temps (T1) sans demande de communication (12) en provenance d'un autre terminal mobile (14), pendant une deuxième période de temps (T2), le premier terminal mobile (2)
- envoie une pluralité de demandes de communication (24) pour établir une liaison (22) avec un autre terminal mobile (14), et lorsqu'une liaison (22) a ainsi été établie,
- passe en permanence dans l'état "maître" (20) et l'autre terminal mobile (14) passe en permanence dans l'état "esclave" (10),
**caractérisé en ce que**
- le premier terminal mobile (14) passe dans l'état "esclave" (10) pendant la première période de temps (T1) et passe de l'état "esclave" (10) à l'état "maître" (20) pendant la deuxième période de temps (T2), et
- le premier terminal mobile (2) passe en permanence dans l'état "esclave" (10) ou dans un état de communication inactif lorsqu'aucune liaison (22) avec un autre terminal mobile (14) n'a été établie après une troisième période de temps (T3), et le système d'aide auditive (6) est ainsi utilisé dans un mode de fonctionnement monaural (32).

2. Procédé (1) selon la revendication 1,
dans lequel le premier terminal mobile (2) répète (26) le passage respectif dans l'état "esclave" (10) pendant une première période de temps (T1) et le passage respectif dans l'état "maître" (20) pendant une deuxième période de temps (T2), jusqu'à ce qu'une liaison (22) soit établie avec un autre terminal mobile (14) ou jusqu'à ce que le premier terminal mobile (2) passe en permanence dans l'état "esclave" (10) ou dans l'état de communication inactif.

3. Procédé (1) selon la revendication 1 ou la revendication 2,
dans lequel la durée de la première période de temps (T1) et/ou de la deuxième période de temps (T2) est respectivement prédéterminée de manière aléatoire ou pseudo-aléatoire.

4. Procédé (1) selon l'une des revendications précédentes,
dans lequel une liaison (22) est établie entre le premier terminal mobile (2) et un autre terminal mobile (14),
dans lequel, en cas de perte de ladite liaison (22), le premier terminal mobile (2) passe dans l'état "esclave" (10) et répète l'état "esclave" (10) avec l'état "maître" (20) jusqu'à ce qu'une liaison (22) soit de nouveau établie avec l'autre terminal mobile (14) ou que la troisième période (T3) soit écoulée.

5. Procédé (1) selon l'une des revendications précédentes,
dans lequel le premier terminal mobile (2) envoie la pluralité de demandes de communication (24) au moyen d'une transmission par induction.

6. Procédé (1) selon l'une des revendications précédentes,
dans lequel un deuxième appareil auditif (16) du système d'aide auditive (6) est utilisé en tant qu'autre terminal mobile (14), et dans lequel
- le premier appareil auditif (4) passe en permanence dans l'état "esclave" (10) et le deuxième appareil auditif (20) passe en permanence dans l'état "maître" (20), ou
- le premier appareil auditif (4) passe en permanence dans l'état "maître" (20) et le deuxième appareil auditif (16) passe en permanence dans l'état "esclave" (10), de sorte que le système d'aide auditive (6) est ainsi utilisé dans un mode de fonctionnement binaural (23) .

7. Système d'aide auditive (6) comportant au moins un appareil auditif (4),
dans lequel le système d'aide auditive (6) est conçu pour mettre en oeuvre le procédé (1) selon l'une des revendications précédentes.
